# EUROPEAN PATENT APPLICATION

(11) **EP 2 880 989 A1**
(43) Date of publication of application: **10.06.2015**
(21) Application number: 13825905.6
(22) Date of filing: 12.02.2013
(51) Int. Cl.: A23K 1/18, A23K 1/10, A23K 1/14, A23K 1/16

(54) **FOODSTUFF FOR CULTURED FISH AND METHOD FOR PROMOTING GROWTH OF CULTURED FISH USING SAME**

(30) Priority: 03.08.2012 JP 2012172873
(71) Applicant: Kyowa Hakko Bio Co., Ltd., Tokyo 100-8185 (JP); Kochi University, Kochi-shi Kochi 780-8520 (JP)
(72) Inventor: FUKADA Haruhisa, Kochi-shi Kochi 780-8520 (JP); TAKAHASHI Noriyuki, Kochi-shi Kochi 780-8520 (JP)
(74) Representative: Vossius & Partner Patentanwälte Rechtsanwälte mbB
(86) International application number: PCT/JP2013/053288
(87) International publication number: WO 2014/020925

(57) **Abstract**

The present invention provides a feed for a farmed fish, which contains an animal raw material, a part or the whole of which has been substituted with a plant raw material, and/or a plant raw material as a protein source, and can prevent a decrease in growth efficiency and feed efficiency for fishes, a method for promoting the growth of a farmed fish using the feed for a farmed fish, and an additive for a feed for preparing the feed for a farmed fish. The present invention relates to a feed for a farmed fish, which contains an animal raw material, a part or the whole of which has been substituted with a plant raw material, and/or a plant raw material as a protein source, and is characterized by containing at least one amino acid selected from the group consisting of alanine, glutamic acid, glutamine, proline, ornithine, citrulline, and arginine.

## Description

### Technical Field

The present invention relates to a feed for a farmed fish, a method for promoting the growth of a farmed fish using the feed for a farmed fish, and an additive for a feed for preparing the feed for a farmed fish.

### Background Art

A main component of a feed for a farmed fish is a protein, and as a raw material thereof, a fish meal which is an animal raw material is mainly used. However, in recent years, the amount of natural fish resources to be used as the raw material is limited, the demand therefor increases as the global fish farming is developed, and so on, and therefore, the supply amount of a fish meal is unstable, and also its price has risen remarkably. Due to this, in order to maintain fish farming, it is essential to develop a feed for a farmed fish in which the animal raw material is substituted with a plant raw material such as a plant protein which is stably supplied.

### Summary of the Invention

### Problems to be Solved by the Invention

However, a feed for a farmed fish, which contains an animal raw material, a part or the whole of which has been substituted with a plant raw material, and/or a plant raw material as a protein source (hereinafter also referred to as "low animal raw material feed") has a problem that the growth efficiency and the feed efficiency are lower as compared with those of a conventional fish meal feed. Therefore, an object of the present invention is to prevent a decrease in growth efficiency and feed efficiency of a low animal raw material feed.

That is, an object of the present invention is to provide a feed for a farmed fish which is a low animal raw material feed, and can prevent a decrease in growth efficiency and feed efficiency for a farmed fish, a method for promoting the growth of a farmed fish using the feed for a farmed fish, and an additive for a feed for preparing the feed for a farmed fish.

### Means for Solving the Problems

The present inventors found that by adding a specific amino acid to a low animal raw material feed, the growth efficiency and the feed efficiency for a farmed fish are improved as compared with those of the low animal raw material feed before adding the amino acid thereto, and a feed for a farmed fish in which an animal raw material has not been substituted with a plant raw material, and thus completed the present invention.

That is, the present invention is the following:
1. A feed for a farmed fish, comprising an animal raw material, a part or the whole of which has been substituted with a plant raw material, and/or a plant raw material as a protein source, characterized by containing at least one amino acid selected from the group consisting of alanine, glutamic acid, glutamine, proline, ornithine, citrulline, and arginine.
2. The feed for a farmed fish described in item 1, wherein the contained amount of each of the amino acids is 0.5% (w/w) or more to the amount of the feed for a farmed fish.
3. The feed for a farmed fish described in item 1, wherein the contained amount of each of the amino acids is 3.0% (w/w) or more to the amount of the plant raw material.
4. The feed for a farmed fish described in item 1, wherein the contained amount of each of the amino acids is 3.0% (w/w) or more to the amount of the animal raw material substituted with the plant raw material.
5. The feed for a farmed fish described in any one of items 1 to 4, wherein the amount of the animal raw material substituted with the plant raw material is 10% (w/w) or more of the amount to the originally contained animal raw material.
6. The feed for a farmed fish described in any one of items 1 to 5, wherein the animal raw material is a fish meal.
7. The feed for a farmed fish described in any one of items 1 to 6, wherein the plant raw material is a soy protein concentrate.
8. A method for promoting the growth of a farmed fish, characterized in that the feed for a farmed fish described in any one of items 1 to 7 is fed to a farmed fish.
9. An additive for a feed, which is for preparing the feed for a farmed fish described in any one of items 1 to 7, characterized by comprising at least one amino acid selected from the group consisting of alanine, glutamic acid, glutamine, proline, ornithine, citrulline, and arginine.

### Effects of the Invention

The feed for a farmed fish of the present invention contains an animal raw material, a part or the whole of which has been substituted with a plant raw material, and/or a plant raw material as a protein source, and also contains at least one amino acid selected from the group consisting of alanine, glutamic acid, glutamine, proline, ornithine, citrulline, and arginine, and therefore can improve the growth efficiency and the feed efficiency for a farmed fish.

According to the present invention, a feed for a farmed fish, which contains an animal raw material, a part or the whole of which has been substituted with a plant raw material, and/or a plant raw material as a protein source, and is characterized by containing at least one amino acid selected from the group consisting of alanine, glutamic acid, glutamine, proline, ornithine, citrulline, and arginine, a method for promoting the growth of a farmed fish using the feed for a farmed fish, and an additive for a feed for preparing the feed for a farmed fish can be provided.

### Mode for Carrying Out the Invention

### 1. Feed for farmed fish of the invention

The feed for a farmed fish of the present invention is a feed for a farmed fish, which contains an animal raw material, a part or the whole of which has been substituted with a plant raw material, and/or a plant raw material as a protein source, and is characterized by containing at least one amino acid selected from the group consisting of alanine, glutamic acid, glutamine, proline, ornithine, citrulline, and arginine.

The animal raw material in the present invention may be any as long as it is a raw material derived from an animal and capable of serving as a protein source when it is contained in a feed for a farmed fish, however, a material obtained by processing such as drying and powdering of marine animals such as fishes and krills is preferable, and a fish meal is more preferable.

The fishes serving as a source of the fish meal are not particularly limited, however, for example, one or more types of fishes selected from fishes in the family Clupeidae of the order Clupeifonnes, fishes in the family Engraulidae of the order Clupeiformes, fishes in the family Carangidae of the order Perciformes, and fishes in the family Scombridae of the order Perciformes can be used. Examples of the fishes in such families and orders can include sardines such as pilchard, Japanese anchovy, and anchovy, mackerels such as chub mackerel and southern mackerel, horse mackerels such as jack mackerel and blue mackerel, and herrings such as Atlantic herring.

The fish meal may be any as long as it is a fish meal produced by a common method for producing a fish meal, however, it may be subjected to an enzymatic treatment using a biological enzyme such as peptidase, protease, or proteinase.

The plant raw material in the present invention may be any as long as it is a raw material derived from a plant and capable of serving as a protein source when it is contained in a feed for a farmed fish, however, a material having a high protein content obtained by processing a plant in the family Fabaceae such as soybean, or corn or the like is preferable, and a soy protein concentrate or the like is more preferable.

In the present invention, the "feed for a farmed fish, which contains an animal raw material, a part or the whole of which has been substituted with a plant raw material, and/or a plant raw material as a protein source" is a feed for a farmed fish which is obtained by reducing an animal raw material in a feed for a farmed fish containing a conventionally used animal raw material as a protein source for growing a farmed fish, and substituting the reduced portion of the animal raw material with a plant raw material.

The animal raw material may be partially substituted with a plant raw material, or may be entirely substituted with a plant raw material. The contained amount of the plant raw material when substituting the animal raw material with the plant raw material may be any amount as long as it is an amount capable of obtaining a feed effect closest to that of the feed for a farmed fish before substitution, that is, an amount capable of obtaining growth effect on a farmed fish closest thereto, and the contained amount thereof can be easily set by those in the art. However, the plant raw material is preferably contained in an amount nearly equivalent to the amount of the reduced portion of the animal raw material on a weight ratio basis.

In the feed for a farmed fish containing an animal raw material and a plant raw material as the protein source, the contained amount of each of the animal raw material and the plant raw material to the total amount of the feed is generally preferably 10% (w/w) or more and 90% (w/w) or less, more preferably 20% (w/w) or more and 80% (w/w) or less, further more preferably 30% (w/w) or more and 70% (w/w) or less, and particularly preferably 30% (w/w) or more and 50% (w/w) or less.

Examples of the feed for a farmed fish in which a part of an animal raw material has been substituted with a plant raw material can include a feed for a farmed fish in which preferably 10% (w/w) or more, more preferably 30% (w/w) or more, further more preferably 50% (w/w) or more, particularly preferably 70% (w/w) or more, and most preferably 90% (w/w) or more of an animal raw material has been substituted with a plant raw material.

In the case where the low animal raw material feed is used for a farmed fish, since a part or the whole of an animal raw material which should be contained in a feed for a farmed fish is not contained, the growth efficiency and the feed efficiency for a farmed fish are decreased. However, it has not been known that by adding at least one amino acid selected from the group consisting of alanine, glutamic acid, glutamine, proline, ornithine, citrulline, and arginine to the low animal raw material feed, the growth efficiency and the feed efficiency for a farmed fish are recovered, and moreover, the growth and the feed efficiency are improved rather than a fish meal feed.

The contained amount of each amino acid of at least one amino acid selected from the group consisting of alanine, glutamic acid, glutamine, proline, ornithine, citrulline, and arginine in the feed for a farmed fish of the present invention to the total amount of the feed for a farmed fish is preferably 0.5% (w/w) or more, more preferably 0.6% (w/w) or more, further more preferably 0.8% (w/w) or more, particularly preferably 1.0% (w/w) or more, and most preferably 1.3% (w/w) or more. The upper limit of the contained amount of the amino acid in the feed for a farmed fish of the present invention can be appropriately set, but is generally preferably 7% (w/w) or less.

In the feed for a farmed fish of the present invention, the contained amount of each amino acid of at least one amino acid selected from the group consisting of glutamic acid, glutamine, proline, ornithine, citrulline, and arginine to the amount of the plant raw material is 3.0% (w/w) or more, preferably 3.5% (w/w) or more, more preferably 4% (w/w) or more, further more preferably 5% (w/w) or more, and most preferably 7% (w/w) or more. The upper limit of the contained amount of the amino acid in the feed for a farmed fish of the present invention can be appropriately set, but is generally preferably 10% (w/w) or less.

In the feed for a farmed fish of the present invention, the contained amount of each amino acid of at least one amino acid selected from the group consisting of glutamic acid, glutamine, proline, ornithine, citrulline, and arginine to the amount of the animal raw material substituted with the plant raw material is 3.0% (w/w) or more, preferably 3.5% (w/w) or more, more preferably 4% (w/w) or more, further more preferably 5% (w/w) or more, and most preferably 7% (w/w) or more. The upper limit of the contained amount of the amino acid in the feed for a farmed fish of the present invention can be appropriately set, but is generally preferably 10% (w/w) or less.

Specific examples of the feed for a farmed fish of the present invention include a feed for a farmed fish characterized in that proline is contained in an amount of 3.0% (w/w) or more to the amount of the animal raw material substituted with the plant raw material and a feed for a farmed fish which contains an animal raw material and a plant raw material and also contains proline in an amount of 0.5% (w/w) or more to the total amount of the feed for a farmed fish.

When the animal raw material is substituted with the plant raw material, in order to prevent the deterioration of the growth rate and the survival rate of a farmed fish and also prevent a disorder such as green liver syndrome, taurine may be added (JP-A-2001-120190, JP-A-2004-057156). As for the addition amount of taurine, taurine is preferably contained in an amount of preferably 0.01 to 5% (w/w), more preferably 0.05 to 3% (w/w), most preferably 0.1 to 1 % (w/w) in the feed for a farmed fish.

The proline to be contained in the feed for a farmed fish of the present invention may be a free proline or may be a salt such as a salt with an inorganic acid or an organic acid such as a hydrochloride, a sulfate, or an acetate, or a salt with an alkali metal such as a sodium salt or a potassium salt. However, in the above description, the contained amount thereof to the amount of the animal raw material substituted with the plant raw material is 3.0% (w/w) or more, preferably 3.5% (w/w) or more, more preferably 4% (w/w) or more, further more preferably 5% (w/w) or more, and most preferably 7% (w/w) or more, and the contained amount thereof to the total amount of the feed for a farmed fish of the present invention may be 0.5% (w/w) or more, preferably 0.6% (w/w) or more, more preferably 0.8% (w/w) or more, further more preferably 1.0% (w/w) or more, and most preferably 1.3% (w/w) or more, and there is no upper limit of the contained amount thereof from the technical point of view, but the upper limit thereof to the amount of the substituted animal raw material is preferably 10% (w/w) or less, and the upper limit thereof with respect to the total amount of the feed for a farmed fish is preferably 7% (w/w) or less.

The blending ratio of the protein source containing an animal raw material and/or a plant raw material to be contained in the feed for a farmed fish of the present invention may be any ratio in the feed for a farmed fish, however, the protein source is contained in an amount of preferably from 50 to 90% (w/w), more preferably from 50 to 80% (w/w), and most preferably from 50 to 70% (w/w).

Further, the feed for a farmed fish of the present invention may contain a small amount of a protein source other than the animal protein source and the plant protein source.

Examples of the protein source other than the animal protein source and the plant protein source can include a protein synthesized in a test tube and a protein derived from a microorganism.

In the feed for a farmed fish of the present invention, other than the above-described materials, an animal raw material such as a fish soluble, casein, a squid meal, or a krill meal, a plant raw material such as a soybean cake, wheat flour, pregelatinized starch, or cellulose, a yeast for a feed, an animal oil or fat such as cod liver oil or squid liver oil, a plant oil or fat such as soybean oil or rapeseed oil, a vitamin, a mineral, an antioxidant, carboxymethyl cellulose (hereinafter referred to as "CMC"), Guar gum, or the like may be contained.

The feed for a farmed fish of the present invention can be produced by a method in which the above-described amino acid and protein source are added to a raw material of the feed for a farmed fish and mixed as needed, and a common method for producing a feed for a farmed fish is used, or a method in which the above-described amino acid and protein source are added and attached by a conventional method to a feed for a farmed fish obtained by a common method for producing a feed for a farmed fish using a raw material of the feed for a farmed fish.

At least one amino acid selected from the group consisting of alanine, glutamic acid, glutamine, proline, ornithine, citrulline, and arginine is useful as an additive for a feed for preparing the feed for a farmed fish of the present invention, and at least one amino acid selected from the group consisting of alanine, glutamic acid, glutamine, proline, ornithine, citrulline, and arginine can be used as an active ingredient of an additive for a feed for preparing the feed for a farmed fish of the present invention.

### 2. Method for promoting growth of farmed fish of the Invention

The method for promoting the growth of a farmed fish of the present invention is a method for promoting the growth of a farmed fish, characterized in that the feed for a farmed fish of the present invention described in the above item 1 is fed.

The farmed fish to be fed with the feed for a farmed fish of the present invention may be any fish, however, a fish belonging to the family Carangidae such as Japanese amberjack or horse mackerel, a fish belonging to the family Scombridae such as tuna, bonito, or mackerel, or the like is preferable, and a fish belonging to the family Carangidae is more preferable.

The feed for a farmed fish of the present invention can be fed by a method to be used in common fish farming.

The stage at which the feed for a farmed fish of the present invention is fed is not particularly limited, however, the feed is preferably fed at a young fish stage or a juvenile fish stage.

### Examples

Hereinafter, examples of the present invention will be shown, however, the present invention is not limited to these examples.

Hereinafter, test examples with respect to the growth of a farmed fish when the feed for a farmed fish of the present invention was fed are shown.

### [Test Example 1]

As the test feeds, a fish meal feed containing a fish meal as a main protein source (FM group), an SPC feed obtained by substituting 50% of the fish meal protein contained in the fish meal feed with a soy protein concentrate (SPC) (SPC group), an SPC+P feed obtained by adding proline to the SPC feed in an amount of 1.2% (w/w) to the amount of the fish meal feed substituted with SPC (SPC+P group), and an SPC+P2 feed obtained by adding proline to the SPC feed in an amount of 4.2% (w/w) to the amount of the fish meal feed substituted with SPC (SPC+P2 group) were prepared. The other components are shown in Table 1 (in the table, the unit is gram).

**[Table 1]**

| | FM | SPC | SPC+P | SPC+P2 |
|---|---|---|---|---|
| Fish meal | 650 | 325 | 325 | 325 |
| Soy protein concentrate | 0 | 350 | 350 | 350 |
| Krill meal | 50 | 50 | 50 | 50 |
| Taurine | 0 | 4.1 | 4.1 | 4.1 |
| Proline | 0 | 0 | 3.8 | 13.8 |
| Methionine | 0 | 5 | 5 | 5 |
| Cod liver oil | 120 | 150 | 150 | 150 |
| Pregelatinized starch | 75 | 0 | 0 | 0 |
| Cellulose | 40 | 41 | 37 | 27 |
| Vitamin | 20 | 20 | 20 | 20 |
| Mineral | 20 | 20 | 20 | 20 |
| KH₂PO₄ | 0 | 10 | 10 | 10 |
| CMC | 20 | 20 | 20 | 20 |
| Guar gum | 5 | 5 | 5 | 5 |
| Total | 1000 | 1000 | 1000 | 1000 |

Fishes (Japanese amberjack) in their first year of life having a mean fish body weight of 75.2 g were placed in a 1000-L aquarium (15 fishes in each aquarium), and 3 aquariums were prepared for one test group, and 12 aquariums were prepared in total. Each test feed was fed once a day to satiation for 6 days a week. After the fishes were farmed for 12 weeks, the mean fish body weight, the daily growth efficiency [100 x (In final mean weight - In initial mean weight) / trial days], the feed efficiency [100 x (final total body weight - initial total body weight) / total dry feed intake], and the survival rate [100 x (final fish number / initial fish number)] were determined.

The results are shown in Table 2. In the results of the feed efficiency in Table 2, a different alphabet indicates that there is a significant difference at a P value of 5%.

**[Table 2]**

| | FM | SPC | SPC+P | SPC+P2 |
|---|---|---|---|---|
| Initial mean fish body weight (g) | 75.1±0.1 | 75.2±0.1 | 75.4±0.1 | 75.1±0.1 |
| Final mean fish body weight (g) | 318.4±17.71 | 315.4±16.03 | 301.9±4.5 | 375.4±9.74 |
| Daily growth efficiency (%/day) | 1.72±0.07 | 1.71±0.06 | 1.65±0.02 | 1.92±0.04 |
| Feed efficiency, (%) | 63.8±1.8a | 67.4±2.Oab | 65.8±0.9a | 75.6±1.0b |
| Survival rate (%) | 96.7±3.4 | 90.0±3.3 | 100.0±0.0 | 93.4±6.7 |

As shown in Table 2, with respect to the mean fish body weight, the daily growth efficiency, and the feed efficiency, the SPC+P2 group showed significantly higher values than the FM group and the SPC group. Further, in the SPC+P2 group, a decrease in survival rate was almost not observed.

Based on the above results, it was revealed that by adding proline to a low fish meal feed, not merely the growth and the feed efficiency are recovered, but also the growth and the feed efficiency are improved rather than a fish meal feed.

### [Test Example 2]

To fishes (Japanese amberjack having a mean body weight of 103.7 g) fed with a low animal raw material feed having a composition shown in Table 3 to satiation for 10 days, an amino acid (alanine, glutamine, ornithine, or proline) was administered. As a negative control, NaCl was used, and as a positive control, hGH (Growth Hormone) was used. As the administration method, each amino acid dissolved in distilled water at 175 mM was injected into the dorsal muscle of each fish (Japanese amberjack) at a dose of 10 mg/kg.

**[Table 3]**

| | Contained amount (g) |
|---|---|
| Fish meal | 100 |
| Soy protein concentrate | 600 |
| Krill meal | 50 |
| Taurine | 3.4 |
| Methionine | 6 |
| Cod liver oil | 140 |
| Cellulose | 11 |
| Vitamin | 20 |
| Mineral | 25 |
| KH₂PO₄ | 20 |
| CMC | 5 |
| Guar gum | 4 |
| Total | 1000.4 |

At 24 hours after the administration of the amino acid, the expression level of mRNA of IGF1 (Insurin Growth Factor 1) was measured by the RT-PCR method [Fiona L. Pedroso et al., General and Comparative Endocrinology, 161 (2009), pp. 344-353].

The site where the expression level of mRNA of IGF1 was measured was determined to be in the dorsal muscle (provided that the dorsal muscle on the opposite side to the side where the amino acid was administered). The results are shown in Table 4. Five fishes were tested for each specimen, and a mean was calculated.

**[Table 4]**

| Relative expression level of IGFl1 | NaCl | Ala | Gln | Orn | Pro | hGH |
|---|---|---|---|---|---|---|
| 1 | 1.382 | 0.98 | 2.984 | 1.05 | 2.976 | 4.62 |
| 2 | 1.115 | 2.255 | 2.165 | 2.476 | 3.673 | 1.627 |
| 3 | 0.797 | 1.963 | 1.706 | 1.847 | 2.068 | 0.957 |
| 4 | 0.629 | 2.778 | 3.535 | 1.673 | 1.948 | 2.951 |
| 5 | 1.077 | 2.259 | 1.776 | 1.885 | 2.025 | 1.444 |
| Mean of 1 to 5 | 1 | 2.047 | 2.4332 | 1.7862 | 2.538 | 2.3198 |

As shown in Table 4, by administering alanine, glutamine, ornithine, or proline to the farmed fishes fed with the low animal raw material feed into the dorsal muscle thereof, the expression level of mRNA of IGF was increased.

Since IGF1 is a growth factor which indicates a growth promoting effect by an increase in the expression level of mRNA (Shunsuke Moriyama, "Growth hormone and insulin-like growth factor in growth promotion of fish", the Japan Society of Comparative Endocrinology, 2002, 105, pp. 9-10), it was suggested that by administering alanine, glutamine, ornithine, or proline to a farmed fish fed with a low animal raw material feed into the dorsal muscle thereof, the growth of the farmed fish is promoted.

Further, in Test Example 1, it was confirmed that by feeding a farmed fish with a feed obtained by blending proline in a low animal raw material feed, an effect of promoting the growth and an effect of improving the feed efficiency are obtained. That is, based on the results of Test Example 2, it was suggested that in the same manner as the results confirmed in Test Example 1, also by feeding a farmed fish with a feed obtained by blending alanine, glutamine, or ornithine in a low animal raw material feed, an effect of promoting the growth and an effect of improving the feed efficiency are obtained.

In addition, all glutamine, ornithine, and proline are amino acids biosynthesized from glutamic acid, and therefore, it was suggested that also by feeding a farmed fish with a feed obtained by directly blending an amino acid which is synthesized from glutamic acid other than these, that is, glutamic acid, citrulline, or arginine in a low animal raw material feed, an effect of promoting the growth of the farmed fish and an effect of improving the feed efficiency are obtained.

Based on the above results, it was suggested that by feeding a farmed fish with a feed obtained by blending at least one amino acid selected from the group consisting of alanine, glutamic acid, glutamine, proline, ornithine, citrulline, and arginine in a low animal raw material feed, the growth of the farmed fish is promoted and the feed efficiency can be improved.

### [Example 1]

A feed for a farmed fish is produced by mixing a fish meal (32.5 g), soy protein concentrate (35.0 g), a krill meal (5.0 g), taurine (0.41 g), proline (1.38 g), methionine (0.5 g), cod liver oil (15.0 g), cellulose (2.7 g), vitamin (2.0 g), mineral (2.0 g), KH₂PO₄ (1.0 g), CMC (2.0 g), and Guar gum (5.0 g).

### [Example 2]

A feed for a farmed fish is produced by mixing the above materials, and adding tap water in an amount of 450 mL with respect to 1 kg of the feed raw material, and then molding the resulting mixture into pellets with a diameter of 6 mm by a granulator (N022VR-750DX, Hiraga Kosakusho Co., Ltd., Kobe).

While the invention has been described in detail and with reference to specific embodiments thereof, it will be apparent to one skilled in the art that various changes and modifications can be made therein without departing from the spirit and scope thereof. The present application is based on Japanese Patent Application No. 2012-172873 filed on August 3, 2012, and the contents are incorporated herein by reference.

### Industrial Applicability

According to the present invention, a feed for a farmed fish, a method for promoting the growth of a farmed fish using the feed for a farmed fish, and an additive for a feed for preparing the feed for a farmed fish are provided.

## Claims

1. A feed for a farmed fish, comprising an animal raw material, a part or the whole of which has been substituted with a plant raw material, and/or a plant raw material as a protein source, **characterized by** containing at least one amino acid selected from the group consisting of alanine, glutamic acid, glutamine, proline, ornithine, citrulline, and arginine.

2. The feed for a farmed fish according to claim 1, wherein the contained amount of each of the amino acids is 0.5% (w/w) or more to the amount of the feed for a farmed fish.

3. The feed for a farmed fish according to claim 1, wherein the contained amount of each of the amino acids is 3.0% (w/w) or more to the amount of the plant raw material.

4. The feed for a farmed fish according to claim 1, wherein the contained amount of each of the amino acids is 3.0% (w/w) or more to the amount of the animal raw material substituted with the plant raw material.

5. The feed for a farmed fish according to any one of claims 1 to 4, wherein the amount of the animal raw material substituted with the plant raw material is 10% (w/w) or more to the amount of the originally contained animal raw material.

6. The feed for a farmed fish according to any one of claims 1 to 5, wherein the animal raw material is a fish meal.

7. The feed for a farmed fish according to any one of claims 1 to 6, wherein the plant raw material is a soy protein concentrate.

8. A method for promoting the growth of a farmed fish, **characterized in that** the feed for a farmed fish according to any one of claims 1 to 7 is fed to a farmed fish.

9. An additive for a feed, which is for preparing the feed for a farmed fish according to any one of claims 1 to 7, **characterized by** comprising at least one amino acid selected from the group consisting of alanine, glutamic acid, glutamine, proline, ornithine, citrulline, and arginine.
